# EUROPÄISCHE PATENTSCHRIFT

(11) **EP 1 415 795 B1**
(45) Veröffentlichungstag und Bekanntmachung des Hinweises auf die Patenterteilung: **10.05.2006**
(21) Anmeldenummer: 03018508.6
(22) Anmeldetag: 16.08.2003
(51) Int. Cl.: B29D 30/06, B29C 35/04

(54) **Vorrichtung zum Vulkanisieren von Fahrzeugreifen**
Apparatus for vulcanizing vehicle tyres
Dispositif pour la vulcanisation de pneumatiques pour véhicules

(30) Priorität: 30.10.2002 DE 10250424
(43) Veröffentlichungstag der Anmeldung: 06.05.2004
(73) Patentinhaber: Continental Aktiengesellschaft, 30165 Hannover (DE)
(72) Erfinder: Walczok, Mario, 30900 Wedemark (DE); Daldrup, Norbert, Dr., 31558 Wölpinghausen (DE)

(56) Entgegenhaltungen:
- DE-A- 19 924 830
- US-A- 3 649 729
- US-A- 3 980 743
- US-A- 5 055 245
- US-B1- 6 267 084

## Beschreibung

Die Erfindung betrifft eine Vorrichtung zum Vulkanisieren von Fahrzeugreifen mit einer Heizpresse, einem mit einem dampfförmigen Heizmedium beheizbaren Balg und einem Temperatursensor zur Messung der Vulkanisationstemperatur.

Die Reifenvulkanisation erfolgt in Heizpressen, bei der der Reifenrohling in geeignete Formsegmente eingesetzt und unter Einwirkung von Wärme sowie Druck vulkanisiert wird. Auf der Reifeninnenseite wird ein flexibler Balg an den Reifen angelegt, der mit einem dampfförmigen Heizmedium beaufschlagt wird und auf diese Weise dem Reifenrohling von der Innenseite die notwendige Vulkanisationsenergie zuführt. Die Zuführung der Vulkanisationsenergie über die Reifeninnenseite wird als Innenheizung bezeichnet. Die erforderlichen Vulkanisationstemperaturen und die Vulkanisationsdauer sind von verschiedenen Parametern abhängig, z.B. von dem Reifentyp.

Es ist bekannt, zur Temperaturregelung die Temperatur des Heizmediums zu messen, die dem Balg zugeführt wird. Die gemessenen Temperaturwerte werden über eine Auswerteeinheit mit einer vorgegebenen Temperatursollkurve verglichen, und anschließend erfolgt gegebenenfalls eine Zuführung von weiterer Heizenergie, falls beispielsweise eine zu geringe Temperatur vorliegt. Bei herkömmlichen Heizpressen sind die Temperatursensoren beispielsweise in der Ableitung für das dampfförmige Heizmedium angeordnet.
Die US 6267084 B1 offenbart eine Heizpresse bei der vorgeschlagen wird, einen Temperatursensor an einer geeigneten Stelle in der Heizpresse anzuordnen.

Eine andere Anordnung des Temperatursensors offenbart die

US 5,055,245, bei der der Temperatursensor im Heizmediumhohlraum direkt über der Öffnung der Zuleitung für das Heizmedium angeordnet ist. Ein wesentlicher Nachteil dieser Art der Anordnung des Temperatursensors besteht darin, dass die Temperatur an Stellen gemessen wird, die weit von dem zu vulkanisierenden Reifen entfernt liegen. Bei dieser Art der Temperaturmessung wird fälschlicherweise angenommen, dass die Temperatur an allen Stellen im Heizmedium homogen verteilt vorliegt und konstant ist. Im Balg oder in unmittelbarer Nähe der Balginnenseite kann jedoch die Temperatur erheblich von einer davon entfernt liegenden Stelle abweichen. Die Temperatur im radial inneren Bereich des Heizmediumvolumens wird u.a. bedeutend durch die Wärmestrahlung der umliegenden metallischen Heizpressenteile beeinflusst und verfälscht.

Der Erfindung liegt die Aufgabe zugrunde, eine Vorrichtung zum Vulkanisieren von Fahrzeugreifen bereitzustellen, mit der die Messung der Vulkanisationstemperatur der Innenheizung mit einer hohen Genauigkeit durchgeführt wird.

Gelöst wird die Aufgabe gemäß den kennzeichnenden Merkmalen von Anspruch 1.

EinVorteil der Erfindung ist insbesondere darin zu sehen, dass durch die erfindungsgemäße Anordnung des Temperatursensors die Temperaturmessung direkt an den für die Reifenvulkanisation relevanten Stellen der Innenheizung durchgeführt wird. Der Temperatursensor befindet sich nunmehr direkt an der Stelle des Wärmeübergangs zwischen dem Balg und dem zu vulkanisierenden Reifen. Gegenüber der herkömmlichen Temperaturmessung werden auf diese Weise wesentlich genauere Temperaturmesswerte erzielt mit einem geringeren Unsicherheitsfaktor. Die genauere Temperaturmessung hat u.a. zur Folge, dass der Sicherheitszuschlag für die vorgegebene Vulkanisationsdauer erheblich reduziert werden kann. Auf diese Weise wird zum einen eine Energieeinsparung erreicht und zum anderen die Produktionsrate erhöht. Ferner wirkt sich die genauere Temperaturmessung positiv auf eine nachfolgende Temperaturregelung der Innenheizung aus, da frühzeitig eine Abweichung der gemessenen Temperaturwerte von einer vorgegebenen Temperatursollkurve erkannt wird.

Die Erfindung offenbart das Merkmal, dass der Temperatursensor über eine drahtlose Funkverbindung mit einem Signalempfänger in Verbindung steht. Die drahtlose Funkverbindung zwischen Temperatursensor und Signalempfänger besitzt den Vorteil, dass im Balg keine Kabel angeordnet werden müssen, die u.a. die Festigkeit des Balges beeinträchtigen würden. Temperatursensoren mit einem solchen Transpondersystem lassen sich zudem auf eine einfache Art und Weise auf die Außen- oder Innenoberfläche des Balges anbringen.

In einer weiteren vorteilhaften Weiterbildung der Erfindung ist vorgesehen, dass der Signalempfänger im Heizmediumhohlraum der Heizpresse angeordnet ist. Die Anordnung des Signalempfängers im Heizmediumhohlraum gewährleistet eine sichere Signalübertragung ohne Störeinflüsse durch die umgebenden metallischen Formteile der Heizpresse.

In einer weiteren vorteilhaften Weiterbildung der Erfindung ist vorgesehen, dass der Temperatursensor an einer verfahrbaren Vorrichtung im Heizmediumhohlraum der Heizpresse angeordnet ist. Der Temperatursensor wird nunmehr erst zu Beginn der Vulkanisation über die verfahrbare Vorrichtung in die Messposition in unmittelbarer Nähe der Oberfläche der Balgwandinnenseite gebracht. Der Temperatursensor ist nicht mehr direkt mit dem Balg verbunden und dadurch nicht mehr den hohen Belastungen beim Ein-und Ausfahren des Balges ausgesetzt. Vor und nach der Vulkanisation befindet sich der Temperatursensor in einer geschützten Parkposition, wodurch die Lebensdauer des Temperatursensors erheblich erhöht wird.

In einer weiteren vorteilhaften Weiterbildung der Erfindung ist vorgesehen, dass der Temperatursensor in einer Gummikugel angeordnet ist, wobei der radiale Abstand zwischen dem Temperatursensor und der Außenwand der Gummikugel in etwa mit der Wanddicke des Balges übereinstimmt. Mit der Wanddicke der Gummikugel wird der Wärmedurchgang über die Wanddicke des Balges nachgebildet. Auf diese Weise wird gewährleistet, dass der Temperatursensor in der Gummikugel annähernd die gleiche Temperatur misst, wie sie an der entsprechenden Stelle der Außenoberfläche des Balges vorliegt.

In einer weiteren vorteilhaften Weiterbildung der Erfindung ist vorgesehen, dass mindestens ein Temperatursensor in der Nähe einer heizkritischen Stelle des zu vulkanisierenden Reifen angeordnet ist. Die heizkritischen Stellen sind die dicksten Materialstellen des Reifens, an denen gewährleistet werden muss, dass eine vollständige Vulkanisation des Reifenmaterials erfolgt ist. Für die Reifenvulkanisation sind daher insbesondere die Temperaturmessungen an den heizkritischen Stellen des zu vulkanisierenden Reifens von hoher Bedeutung.

Anhand mehrerer Ausführungsbeispiele soll die Erfindung näher erläutert werden. Es zeigen:
- Fig. 1:: eine erfindungsgemäße Vorrichtung mit einem im Balg angeordneten Temperatursensor und
- Fig. 2:: eine erfindungsgemäße Vorrichtung mit einem an einer verfahrbaren Vorrichtung angeordneten Temperatursensor.

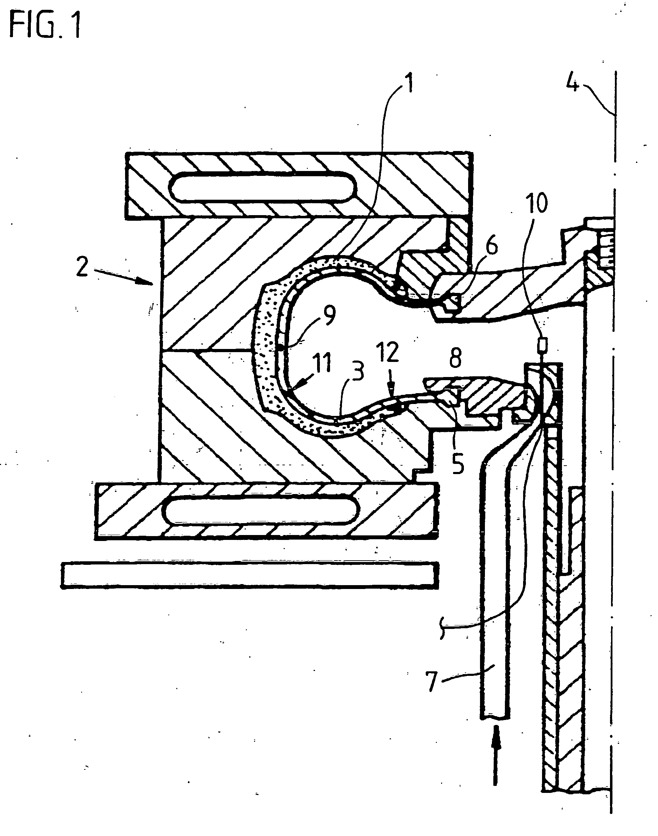

Fig. 1 zeigt eine erfindungsgemäße Vorrichtung zum Vulkanisieren von Fahrzeugreifen in einem Radialschnitt. Die Vorrichtung ist im Wesentlichen achsensymmetrisch zur Symmetrieachse 4. Der zu vulkanisierende Reifen 1 ist in der Heizpresse 2 angeordnet, die mit einem dampfförmigen Heizmedium betrieben wird. Der Balg 3 der Heizpresse 2 liegt elastisch an der Oberfläche der Reifeninnenseite an und ist über die Fixierungspunkte 5 und 6 mit der Heizpresse verbunden. Das dampfförmige Heizmedium wird über die Zuleitung 7 dem Heizmediumhohlraum 8 zugeführt. Der zu vulkanisierende Reifen 1 bekommt die notwendige Vulkanisationstemperatur über die Balgwand des Balges 3 zugeführt.

Bei der erfindungsgemäßen Vorrichtung ist mindestens ein Temperatursensor 9 vorgesehen, der in der Balgwand des Balges 3 angeordnet ist. Dieser Temperatursensor 9 steht vorzugsweise direkt mit der nach außen gerichteten Außenseite des Balges 3 in Verbindung und misst somit die Temperatur direkt an den Stellen, an denen die Wärmeübertragung in den zu vulkanisierenden Reifen 1 erfolgt. Es ist ebenfalls denkbar, den Temperatursensor 9 auf der nach innen gerichteten Innenseite des Balges 3 oder im Balgmaterial der Balgwand anzuordnen. Der Temperatursensor 9 ist an einen elektronischen Sender angeschlossen, der die gemessenen Temperaturdaten über ein Funksignal an den im Heizmediumhohlraum 8 angeordneten elektrischen Empfänger 10 weiterleitet. Anschließend werden die Messsignale an eine in der Figur nicht dargestellte Auswerteeinheit weitergegeben, die die Temperaturregelung des Vulkanisationsprozesses steuern soll. Unterschreitet der gemessene Temperaturwert beispielsweise eine vorgegebene Sollkurve, so wird über ein Regelalgorythmus das Heizmediumhohlraumvolumen 8 mit einer bestimmten zusätzlichen Dampfmenge beaufschlagt, so dass die gemessene Temperaturkurve wieder mit der Temperatursollkurve in Übereinstimmung gebracht wird. In der Figur 1 ist der Temperatursensor 9 an der heizkritischen Stelle im Zenitbereich des Reifens 1 angeordnet. Weitere heizkritische Stellen sind der Außenbereich der Reifenschulter 11 sowie die breiteste Stelle im Wulstbereich 12, an denen bevorzugt ein Temperatursensor angeordnet werden würde. Es ist ebenfalls denkbar, an allen drei heizkritischen Stellen jeweils einen Temperatursensor vorzusehen, die drei unabhängige Temperaturmessungen durchführen, um auf diese Weise die Temperaturregelung weiter zu optimieren.

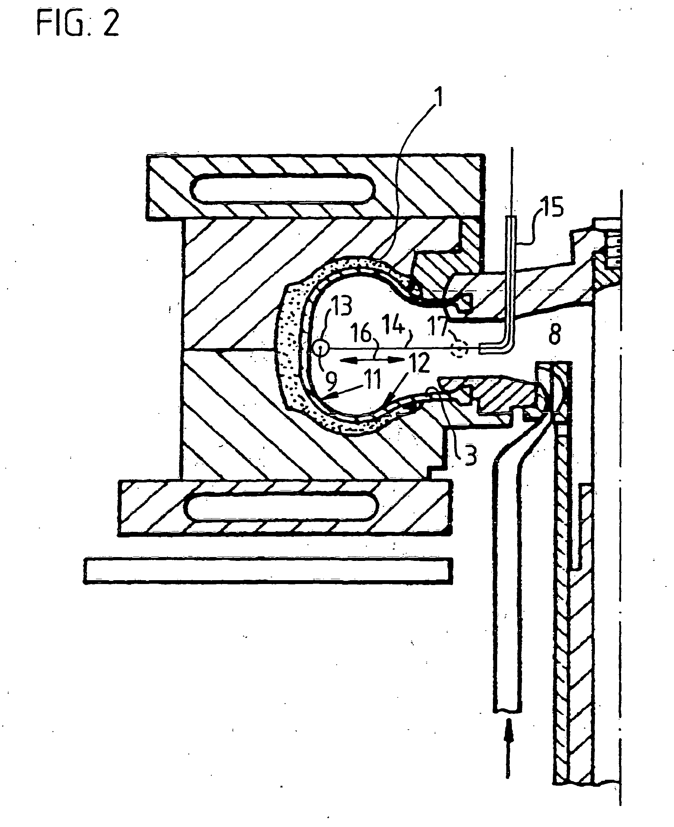

Figur 2 zeigt ein weiteres Ausführungsbeispiel einer erfindungsgemäßen Vorrichtung. Der Temperatursensor 9 ist bei diesem Ausführungsbeispiel in einer Gummikugel 13 angeordnet, die wiederum an einer verfahrbaren Vorrichtung 14 angebracht ist. Die verfahrbare Vorrichtung 14 ist beispielsweise ein Gestänge, welches über ein Führungsrohr 15 in der Führungsrichtung 16 ein- und ausgezogen werden kann. Die gestrichelte Linie zeigt die Gummikugel 13 in einer Parkposition 17. Nachdem der Balg 3 vollständig an dem zu vulkanisierenden Reifen 1 anliegt, wird die Gummikugel 13 aus der Parkposition 17 in die Messposition verfahren, so dass die Gummikugel 13 im Zenitbereich des Reifens direkt an der Innenseite des Balges 3 anliegt. Der radiale Abstand zwischen dem Temperatursensor 9 und der Außenoberfläche der Gummikugel 13 ist in etwa genauso breit wie die Wanddicke des Balges 3. Mit der Wanddicke der Gummikugel 13 wird die Wanddicke des Balges 3 nachgebildet. Es wird dadurch gewährleistet, dass der Temperatursensor 9 annähernd die gleiche Temperatur misst, wie sie an der entsprechenden Stelle auf der Außenseite des Balges 3 vorliegt. Es sind speziell die Temperaturen an der Außenoberfläche des Balges 3 relevant, da an diesen Stellen der Wärmeübergang vom Balg 3 in den zu vulkanisierenden Reifen lerfolgt. Das Führungsrohr 15 lässt sich im Heizmediumhohlraum 8 so ausrichten, dass die Gummikugel 13 an verschiedenen Stellen der Innenoberfläche des Balges positioniert werden kann, beispielsweise ebenfalls im Bereich der heizkritischen Stellen 11 und 12. Der Temperatursensor 9 ist über ein im Gestänge der verfahrbaren Vorrichtung 14 angeordnetes Kabel mit einer in der Figur nicht dargestellten Auswerteeinheit verbunden, die für die Temperaturregelung vorgesehen ist.

### Bezugszeichenliste (ist Teil der Beschreibung)

- 1: Reifen
- 2: Heizpresse
- 3: Balg
- 4: Symmetrieachse
- 5: Fixierungspunkt
- 6: Fixierungspunkt
- 7: Zuleitung für Heizmedium
- 8: Heizmediumhohlraum
- 9: Temperatursensor
- 10: Elektronischer Empfänger
- 11: Außenbereich der Reifenschulter
- 12: breiteste Stelle im Wulstbereich
- 13: Gummikugel
- 14: verfahrbare Vorrichtung
- 15: Führungsrohr
- 16: Führungsrichtung
- 17: Parkposition der Gummikugel

## Patentansprüche

1. Vorrichtung zum Vulkanisieren von Fahrzeugreifen mit einer Heizpresse, einem mit einem dampfförmigen Heizmedium beheizbaren Balg und einem Temperatursensor zur Messung der Vulkanisationstemperatur,
wobei mindestens ein Temperatursensor (9) in der Balgwand oder in unmittelbarer Nähe der Oberfläche der Balgwandinnenseite angeordnet ist,
**dadurch gekennzeichnet, dass**
der Temperatursensor (9) über eine drahtlose Funkverbindung mit einem Signalempfänger (10) in Verbindung steht.

2. Vorrichtung nach Anspruch 1,
**dadurch gekennzeichnet, dass**
der Signalempfänger (10) im Heizmediumhohlraum (8) der Heizpresse (2) angeordnet ist.

3. Vorrichtung nach Anspruch 1 oder 2,
**dadurch gekennzeichnet, dass**
der Temperatursensor (9) an einer verfahrbaren Vorrichtung (14) im Heizmediumhohlraum (8) der Heizpresse (2) angeordnet ist.

4. Vorrichtung nach einem der Ansprüche 1 bis 3,
**dadurch gekennzeichnet, dass**
der Temperatursensor (9) in einer Gummikugel (13) angeordnet ist, wobei der radiale Abstand zwischen dem Temperatursensor (9) und der Außenwand der Gummikugel (13) in etwa mit der Wanddicke des Balges (3) übereinstimmt.

5. Vorrichtung nach einem der Ansprüche 1 bis 4,
**dadurch gekennzeichnet, dass**
mindestens ein Temperatursensor (9) in der Nähe einer heizkritischen Stelle (11,12) des zu vulkanisierenden Reifen (1) angeordnet ist.

## Claims

1. Apparatus for vulcanizing vehicle tyres, with a heating press, a bladder that can be heated by means of a heating medium in the form of steam and a temperature sensor for measuring the vulcanizing temperature, at least one temperature sensor (9) being arranged in the bladder wall or in the direct vicinity of the surface of the inner side of the bladder wall, **characterized in that** the temperature sensor (9) is in connection with a signal receiver (10) via a wireless radio link.

2. Apparatus according to Claim 1, **characterized in that** the signal receiver (10) is arranged in the heating medium cavity (8) of the heating press (2).

3. Apparatus according to Claim 1 or 2, **characterized in that** the temperature sensor (9) is arranged on a movable device (14) in the heating medium cavity (8) of the heating press (2).

4. Apparatus according to one of Claims 1 to 3, **characterized in that** the temperature sensor (9) is arranged in a rubber sphere (13), the radial distance between the temperature sensor (90) and the outer wall of the rubber sphere (13) coinciding approximately with the wall thickness of the bladder (3).

5. Apparatus according to one of Claims 1 to 4, **characterized in that** at least one temperature sensor (9) is arranged in the vicinity of a heating-critical point (11, 12) of the tyre (1) to be vulcanized.

## Revendications

1. Dispositif pour la vulcanisation de pneumatiques pour véhicules avec une presse chauffante, un soufflet pouvant être chauffé avec un fluide chauffant sous forme de vapeur et un capteur de température pour mesurer la température de vulcanisation, au moins un capteur de température (9) étant disposé dans la paroi du soufflet ou à proximité immédiate de la surface du côté intérieur du soufflet, **caractérisé en ce que** le capteur de température (9) est en liaison avec un récepteur de signaux (10) par le biais d'une liaisons radioélectrique sans fil.

2. Dispositif selon la revendication 1, **caractérisé en ce que** le récepteur de signaux (10) est disposé dans l'espace creux de fluide chauffant (8) de la presse chauffante (2).

3. Dispositif selon la revendication 1 ou 2, **caractérisé en ce que** le capteur de température (9) est disposé sur un dispositif mobile (14) dans l'espace creux de fluide chauffant (8) de la presse chauffante (2).

4. Dispositif selon l'une des revendications 1 à 3, **caractérisé en ce que** le capteur de température (9) est disposé dans une bille en caoutchouc (13), la distance radiale entre le capteur de température (9) et la paroi extérieure de la bille en caoutchouc (13) coïncidant approximativement à l'épaisseur de la paroi du soufflet (3).

5. Dispositif selon l'une des revendications 1 à 4, **caractérisé en ce qu'**au moins un capteur de température (9) est disposé à proximité d'un point chaud critique (11, 12) du pneumatique (1) à vulcaniser.
